# EUROPÄISCHE PATENTSCHRIFT

(11) **EP 3 665 375 B1**
(45) Veröffentlichungstag und Bekanntmachung des Hinweises auf die Patenterteilung: **04.08.2021**
(21) Anmeldenummer: 18734807.3
(22) Anmeldetag: 27.06.2018
(51) Int. Cl.: B62M 23/02, F02B 61/02

(54) **ANTRIEBSVORRICHTUNG FÜR EIN MOTORRAD**
DRIVE DEVICE FOR A MOTORCYCLE
DISPOSITIF D'ENTRAÎNEMENT POUR UNE MOTOCYCLETTE

(30) Priorität: 08.08.2017 DE 102017213722
(43) Veröffentlichungstag der Anmeldung: 17.06.2020
(73) Patentinhaber: Bayerische Motoren Werke Aktiengesellschaft, 80809 München (DE)
(72) Erfinder: GATZKA, Norbert, 85386 Eching (DE); HOEHL, Johannes, 82216 Maisach / Ortsteil Oberlappach (DE)
(86) Internationale Anmeldenummer: PCT/EP2018/067281
(87) Internationale Veröffentlichungsnummer: WO 2019/029900

(56) Entgegenhaltungen:
- EP-A1- 0 068 336
- EP-A1- 2 639 091
- WO-A1-2011/120547
- US-A- 5 740 877
- US-A1- 2006 213 706
- ANONYMOUS: "2013 BMW R1200RT", FJRKURT , XP002785967, Gefunden im Internet: URL:https://sites.google.com/site/fjrkurt/ home/2013-bmw-r1200rt [gefunden am 2018-10-23]

## Beschreibung

Die Erfindung betrifft eine Antriebsvorrichtung für ein Motorrad. In Motorrädern werden üblicherweise Antriebsvorrichtungen eingesetzt, welche eine besonders kompakte Bauweise haben. Solche Antriebsvorrichtungen sind insbesondere in Motorrädern notwendig, weil hier nur ein sehr begrenzter Bauraum zur Verfügung steht. Gleichzeitig besteht vermehrt die Anforderung, auch Motorräder mit alternativen Antrieben, insbesondere mit Hybrid-Antrieben bestehend aus Verbrennungskraftmaschine und Elektromotor auszustatten. Dies sollte insbesondere auch innerhalb einer Baureihe eines Motorradtyps ohne unnötig vollständige Umkonstruktion ermöglicht werden.

Hiervon ausgehend soll eine neue Antriebsvorrichtung für ein Motorrad vorgestellt werden, welche insbesondere auch für die Ausbildung von Hybrid-Systemen umfassend Verbrennungskraftmaschine und Elektromotor geeignet ist.

Diese Aufgaben werden gelöst mit einer Antriebsvorrichtung gemäß den Merkmalen des Anspruchs 1. Weitere vorteilhafte Ausführungsvarianten der Antriebsvorrichtung sind in den abhängig formulierten Ansprüchen angegeben.

Beschrieben werden soll eine Antriebsvorrichtung für ein Motorrad aufweisend eine Verbrennungskraftmaschine mit einer ersten Stirnseite sowie einer der ersten Stirnseite gegenüberliegenden zweiten Stirnseite sowie einer Adapterbaugruppe mit einer Kopplungsstirnseite sowie einer der Kopplungsstirnseite gegenüberliegenden Anschlussstirnseite, wobei die Stirnseiten jeweils senkrecht zu Achsen und Wellen der Verbrennungskraftmaschine und der Adapterbaugruppe ausgerichtet sind, wobei weiter die Adapterbaugruppe derart an der Verbrennungskraftmaschine angeordnet ist, dass die erste Stirnseite und die Kopplungsstirnseite aneinander liegen, wobei die Anschlussstirnseite mindestens zwei Anschlussgeometrien für verschiedene elektrische Antriebsaggregate aufweist.

Die Adapterbaugruppe ist insbesondere ein universeller Adapter, der in einem Baukastenprinzip für verschiedene Antriebsvorrichtungen für ein Motorrad eingesetzt werden kann. Die Adapterbaugruppe ermöglicht es, insbesondere unterschiedliche Kombinationen der Verbrennungskraftmaschine mit verschiedenen elektrischen Antriebsaggregaten mit geringem zusätzlichen Konstruktionsaufwand zu realisieren.

Die Verbrennungskraftmaschine und die Adapterbaugruppe haben jeweils Achsen und Wellen. Hierzu zählt beispielsweise die Kurbelwelle und die Achse auf welcher die Kurbelwelle liegt. Hierzu zählen beispielsweise auch Wellen und Achsen von Ventilantrieben, Ausgleichswellen etc. Alle Achsen und Wellen von der Verbrennungskraftmaschine und der Adapterbaugruppe sind üblicherweise parallel zueinander ausgerichtet. Die Stirnseiten (erste Stirnseite und zweite Stirnseite der Verbrennungskraftmaschine sowie Kopplungsstirnseite und Anschlusstirnseite der Adapterbaugruppe) sind senkrecht bzw. normal zu diesen Achsen und Wellen ausgerichtet.

Die erste Stirnseite und die Kopplungsstirnseite sind nach Art von miteinander korrespondierenden Flanschflächen gestaltet, die wie beschrieben aneinander anliegen, wenn die Antriebsvorrichtung montiert ist. Die Kopplungsstirnseite der Adapterbaugruppe wird als Kopplungsstirnseite bezeichnet, weil sie zur Ankopplung der Adapterbaugruppe an die Verbrennungskraftmaschine dient.

Die Anschlussgeometrien sind bevorzugt jeweils speziell für eine bestimmte Art von elektrischen Antriebsaggregaten geeignet. Die Anschlussgeometrien können aber auch universell gestaltet sein, so dass verschiedene Arten von elektrischen Antriebsaggregaten an einer Anschlussgeometrie angeschlossen sein können. Bevorzugt existieren an der Adapterplatte mindestens zwei, besonders bevorzugt drei oder mehr verschiedene Anschlussgeometrien, die jeweils für verschiedene elektrische Antriebsaggregate oder für verschiedenen Typen von elektrischen Antriebsaggregaten geeignet sind.

Besonders bevorzugt ist die Verbrennungskraftmaschine nach Art eines Boxermotors aufgebaut. Boxermotoren haben eine kompakte Bauhöhe und eignen sich besonders für den Einsatz in Motorrädern.

Es sind an der Anschlussstirnseite zumindest die folgenden Anschlussgeometrien vorgesehen:
- eine erste Anschlussgeometrie für einen Startermotor,
- eine zweite Anschlussgeometrie für einen Generator,
- eine dritte Anschlussgeometrie für eine elektrische Antriebsmaschine,
- eine Anschlussgeometrie für einen Startergenerator.

Die Adapterbaugruppe umfasst insbesondere Mittel zur Übertragung mechanischer Drehmomente von einer Kurbelwelle der Verbrennungskraftmaschine zu den genannten Anschlussgeometrien. Die Anschlussgeometrien umfassen bevorzugt jeweils einen Flansch, an welchen ein Startermotor bzw. ein Generator bzw. eine elektrische Antriebsmaschine derart angeschlossen werden können, dass Drehmomente von diesen Komponenten zur Kurbelwelle der Verbrennungskraftmaschine übertragen werden können und umgekehrt.

Ein an die erste Anschlussgeometrie angeschlossener Startermotor ist hier ein Startermotor, mit welchem die elektrische Antriebsmaschine in Betrieb genommen werden kann. Der Startermotor hat hier im Verhältnis zur Leistung der Verbrennungskraftmaschine häufig ein besonders hohes maximales Drehmoment. Insbesondere ist das Drehmoment des Startermotors im Verhältnis zum Drehmoment der Verbrennungskraftmaschine höher als dies beispielsweise bei einer Antriebsvorrichtung für einen PKW der Fall wäre. Dies liegt insbesondere an dem notwendigen Drehmoment, welches zum Starten einer Verbrennungskraftmaschine für ein Motorrad notwendig ist. Aufgrund der geringen Zylinderanzahl (bspw. Zwei Zylinder Boxer) ist dieses Drehmoment häufig verhältnismäßig hoch. Dementsprechend sind Mittel zur Übertragung wirkender Drehmomente zu ersten Anschlussgeometrien bevorzugt zur Übertragung großer Drehmomente (beispielsweise größer als 30 Prozent des maximalen Drehmoments der Verbrennungskraftmaschine) ausgelegt. Damit der Startermotor hinsichtlich seiner Leistung nicht so groß dimensioniert sein muss existiert bevorzugt ein Übersetzungsgetriebe mit einer hohen Übersetzung zwischen dem Startermotor und der Verbrennungskraftmaschine. Bevorzugt beträgt das Übersetzungsverhältnis mehr als 20:1 und besonders bevorzugt sogar 30:1 oder noch höher. Mit so einem Übersetzungsgetriebe kann mit einem verhältnismäßig kleinen Startermotor ein sehr hohes Drehmoment erreicht werden. Darüber hinaus sind der Startermotor (und insbesondere auch die Adapterbaugruppe und die Anschlussgeometrie) bevorzugt so ausgelegt, dass hohe Drehzahlen der Verbrennungskraftmaschine nicht zu einer Beeinträchtigung oder Beschädigung des Startermotors führen können. Die maximale Drehzahl der Verbrennungskraftmaschine ist bevorzugt verhältnismäßig hoch. Bevorzugt handelt es sich um eine Verbrennungskraftmaschine mit einer maximalen Betriebsdrehzahl von mehr als 8.000 u/min [u/min = Umdrehungen pro Minute] oder sogar mehr als 9.000 u/min. Insbesondere aufgrund der hohen Übersetzungsverhältnisse des Übersetzungsgetriebes können an dem Startermotor daher sehr hohe Drehzahlen auftreten. Bevorzugt sind daher konstruktive Maßnahmen vorgesehen durch welche eine Beeinträchtigung oder Beschädigung des Startermotors durch hohe Drehzahlen verhindert werden kann.

Beispielsweise ist es vorteilhaft, wenn erste Anschlussgeometrien mit einer Freilaufkupplung ausgestattet sind, die eine Kraftübertragung zwischen der ersten Anschlussgeometrie und der Verbrennungskraftmaschine unterbricht, sobald eine Drehzahl der Verbrennungskraftmaschine größer ist als die Drehzahl eines an die erste Anschlussgeometrie angeschlossenen Startermotors. Eine solche Freilaufkupplung ist eine konstruktive Maßnahme, durch die eine Beeinträchtigung oder Beschädigung des Startermotors durch hohe Drehzahlen verhindert werden kann. Eine Alternative zu einer Freilaufkupplung wäre ein Design des Startermotors mit welchem der Startermotor für entsprechend hohe Drehzahlen ausgelegt ist.

Ein an die zweite Anschlussgeometrie angeschlossener Generator dient insbesondere dazu, elektrische Energie für elektrische Systeme des Motorrads bereitzustellen. Mittel zur Übertragung wirkender Drehmomente zur zweiten Anschlussgeometrie sind üblicherweise deutlich kleiner ausgestaltet als für die Anschlussgeometrie. Wirkende Drehmomente, die zu einem angeschlossenen Generator übertragen werden, sind bevorzugt gleichmäßig (mit geringen Drehmomentspitzen). Dementsprechend ist eine kleine Dimensionierung hier möglich.

Eine an die dritte Anschlussgeometrie angeschlossene Antriebsmaschine hat insbesondere den Zweck, einen signifikanten Beitrag zur mechanischen Antriebsleistung der Antriebsvorrichtung insgesamt zu leisten.

Als weitere Anschlussgeometrie wird weiter oben eine Anschlussgeometrie für einen Startergenerator vorgeschlagen. Ein Startergenerator ist ein kombinierter Startermotor und Generator in einem Bauteil. Die Anschlussgeometrie für den Startergenerator ist bevorzugt zugleich eine der weiteren hier genannten Anschlussgeometrien (erste Anschlussgeometrie, zweite Anschlussgeometrie oder dritte Anschlussgeometrie). Die weitere Anschlussgeometrie für den Startergenerator ist damit bevorzugt (nur) eine Nutzungsmöglichkeit der ersten Anschlussgeometrie, der zweiten Anschlussgeometrie oder der dritten Anschlussgeometrie. Insgesamt sind an der Anschlussstirnseite also drei Anschlussgeometrien vorgesehen, von denen eine Anschlussgeometrie zwei verschiedene Aggregate (wahlweise einen Startermotor, einen Generator bzw. eine elektrische Antriebsmaschine und einen Startergenerator) tragen kann. Somit besteht die Möglichkeit maximal drei verschiedene Aggregate gleichzeitig anzuschließen.

In einer ersten Konfiguration der Antriebsvorrichtung für ein Motorrad können an der Adapterbaugruppe beispielsweise einen Startermotor an einer ersten Anschlussgeometrie und einen Generator an einer zweiten Anschlussgeometrie angeschlossen werden, während an der dritten Anschlussgeometrie nichts angeschlossen ist. Dies entspricht einer klassischen Konfiguration. Ein Motorrad mit einer derart konfigurierten Antriebsvorrichtung ist konventionell mit einer Verbrennungskraftmaschine angetrieben.

In einer zweiten Konfiguration, die einen Hybridantrieb bildet, kann an der dritten Anschlussgeometrie eine elektrische Antriebsmaschine angeschlossen sein. Ein Motorrad mit einer derartig konfigurierten Antriebsvorrichtung ist ein Hybrid-Motorrad. Es sind auch Konfigurationen denkbar, in welchen sowohl eine elektrische Antriebsmaschine an einer dritten Anschlussgeometrie angeschlossen ist als auch ein Generator und/oder ein Startermotor an jeweils dafür vorgesehenen ersten und zweiten Anschlussgeometrien. Solche Konfigurationen sind insbesondere dann möglich, wenn die elektrische Antriebsmaschine nicht dazu geeignet ist, die Aufgaben eines Startermotors und/oder die Aufgaben eines Generators mit zu übernehmen. Dies ist beispielsweise dann der Fall, wenn es sich um eine besonders einfach konfigurierte elektrische Antriebsmaschine handelt.

Alle Anschlussgeometrien sind besonders bevorzugt so ausgestaltet, dass verschiedene elektrische Antriebsaggregate angeschlossen werden können. Besonders bevorzugt ist an der Adapterbaugruppe mindestens eine Anschlussgeometrie vorgesehen, die sowohl für Startermotor als auch für elektrische Antriebsmaschinen geeignet ist. Dritte Anschlussgeometrien für elektrische Antriebsmaschinen sind darüber hinaus bevorzugt so ausgeführt, dass verschieden groß dimensionierte elektrische Antriebsmaschinen daran montiert werden können. Mit der "Größe" einer elektrischen Antriebsmaschine ist in diesem Zusammenhang insbesondere die Dimensionierung der elektrischen Antriebsmaschine hinsichtlich ihrer Antriebsleistung gemeint. Elektrische Antriebsmaschinen mit einer hohen Antriebsleistung erzeugen zugleich auch große Drehmomente.

Weiterhin vorteilhaft ist die Erfindung, wenn innerhalb der Adapterbaugruppe ein Zahnradsystem zur Kraftübertragung von Antriebskraft von der Verbrennungskraftmaschine zu den Anschlussgeometrien und umgekehrt angeordnet ist.

Solche Zahnradsysteme bilden dann bevorzugt Mittel zur Übertragung wirkender Drehmomente von der Verbrennungskraftmaschine zu den jeweiligen Anschlussgeometrien. Dieses Zahnradsystem ist bevorzugt zur Übertragung mechanischer Drehmomente ausgelegt, welche mindestens 30 Prozent des maximalen mechanischen Drehmoments der Verbrennungskraftmaschine beträgt.

Weiter oben wurde schon vorgeschlagen, dass Mittel zur Übertragung von Drehmomenten zur ersten Anschlussgeometrie (für einen Startermotor) so ausgelegt sind, dass mindestens 30 Prozent des maximalen mechanischen Drehmoments der Verbrennungskraftmaschine betragen. Die hier vorgeschlagene Grenze von 30 Prozent bezieht sich jedoch nicht nur auf Mittel zur Übertragung von Drehmomenten zu der zweiten Anschlussgeometrie sondern bevorzugt auf das Zahnradsystem welches alle Anschlussgeometrien mechanisch bzw. drehmomentübertragend miteinander verbindet. Durch die hier vorgeschlagene Untergrenze von mindestens 30 Prozent wird eine noch stärkere Auslegung des Zahnradsystems vorgeschlagen. Sämtliche hier vorgeschlagenen Drehmomentwerte beziehen sich jeweils auf ein mittleres Drehmoment während einer (kontinuierlichen) Leistungsübertragung und nicht auf Drehmomentspitzen, die für einzelne Umdrehungen und Drehwinkel kurzzeitig auftreten können. Gegenüber solchen Drehmomentspitzen ist das Zahnradsystem bevorzugt noch erheblich widerstandsfähiger und kann besonders bevorzugt demnach auch sehr viel höhere Drehmomentspitzen bzw. stoßartige Drehmomente verkraften. Besonders bevorzugt ist das Zahnradsystem sogar zur Übertragung mechanischer Drehmomente ausgelegt, welche mindestens 50 Prozent des maximalen mechanischen Drehmoments der Verbrennungskraftmaschine beträgt.

Hierdurch kann gewährleistet sein, dass das Zahnradsystem auch dann geeignet ist, die auftretenden Kräfte zu übertragen, wenn an der Antriebsvorrichtung eine stark dimensionierte elektrische Antriebsmaschine vorgesehen ist. Bevorzugt sind in den Mitteln zur Übertragung von wirkenden Drehmomenten in der Adapterbaugruppe auch Mittel zur Abdämpfung und/oder zur Entkopplung von stark fluktuierenden Drehmomenten - insbesondere stoßartigen Drehmomenten - vorgesehen. Solche Drehmomente können von der Verbrennungskraftmaschine erzeugt werden und je nach Ausführungsform der elektrischen Aggregate ist es vorteilhaft, durch Mittel zur Abdämpfung und/oder Entkopplung einen Schutz der elektrischen Aggregate zu gewährleisten. Insbesondere größere elektrische Antriebsmaschinen haben ein großes Massenträgheitsmoment, welches von fluktuierenden Drehmomenten regelmäßig beschleunigt und wieder abgebremst wirkt. Dies führt zu einer mechanischen Wechselbelastung, die in der elektrischen Antriebsmaschine und/oder in der Anschlussgeometrie eine starke Alterung und gegebenenfalls auch Beschädigungen hervorruft. Durch geeignete Mittel zur Abdämpfung und/oder Entkopplung in der Adapterbaugruppe kann dies verhindert werden.

Weiterhin vorteilhaft ist die Antriebsvorrichtung, wenn an der zweiten Stirnseite der Verbrennungskraftmaschine eine Kupplungsbaugruppe angeordnet ist, welche dazu eingerichtet ist, eine Übertragung von mechanischer Antriebsleistung der Verbrennungskraftmaschine an ein Getriebe zu steuern.

Die Übertragung von mechanischer Antriebsleistung umfasst insbesondere die Übertragung von Drehmomenten. Die Kupplungsbaugruppe umfasst insbesondere eine mechanische Kupplung mit welcher eine drehmomentübertragende Verbindung zwischen den Antriebsmaschinen (Verbrennungskraftmaschine und elektrische Antriebsmaschine) und dem Getriebe gesteuert werden kann.

Mechanische Antriebsleistung, die von einer an der Adapterbaugruppe befestigten elektrischen Antriebsmaschine erzeugt wird, wird demnach über die Kurbelwelle der Verbrennungskraftmaschine durch die Verbrennungskraftmaschine hindurch zu der Kupplungsbaugruppe geleitet. Die Kupplungsbaugruppe sitzt an der gegenüberliegenden Anschlussseite der Kurbelwelle.

Weiterhin vorteilhaft ist die Antriebsvorrichtung, wenn ein Getriebe derart seitlich unterhalb der Verbrennungskraftmaschine angeordnet ist, dass es sich zwischen der ersten Stirnseite und einer zweiten Stirnseite erstreckt, wobei eine Abtriebswelle des Getriebes sich durch eine dafür vorgesehene Öffnung in der Adapterbaugruppe hindurch erstreckt.

Durch diese Anordnung bildet die Antriebsvorrichtung eine besonders kompakte Baugruppe.

Hier auch beschrieben werden soll ein Motorrad aufweisend eine beschriebene Antriebsvorrichtung. Das Motorrad zeichnet sich insbesondere dadurch aus, dass es Teil einer Baureihe von Motorrädern ist, die sowohl Motorräder nur mit Verbrennungskraftmaschinenantrieb als auch Motorräder mit Hybridantrieb umfasst. Besonders bevorzugt ist ein mit einer derartigen Antriebsvorrichtung ausgestattetes Motorrad mit reinem Verbrennungskraftmaschinenantrieb sogar für einen Hybridbetrieb nachrüstbar.

Die Erfindung sowie das technische Umfeld werden nachfolgend anhand der Figuren näher erläutert. Die Erfindung ist auf die Figuren jedoch nicht beschränkt. Es zeigen:
- Fig. 1:: eine beschriebene Antriebsvorrichtung in einer ersten Konfiguration in einer seitlichen Ansicht,
- Fig. 2:: eine beschriebene Antriebsvorrichtung in einer zweiten Konfiguration in einer seitlichen Ansicht,
- Fig. 3:: eine beschriebene Antriebsvorrichtung in einer ersten Konfiguration in einer stirnseitigen Ansicht,
- Fig. 4:: eine beschriebene Antriebsvorrichtung in einer zweiten Konfiguration in einer stirnseitigen Ansicht, und
- Fig. 5:: ein Motorrad aufweisend eine beschriebene Antriebsvorrichtung.

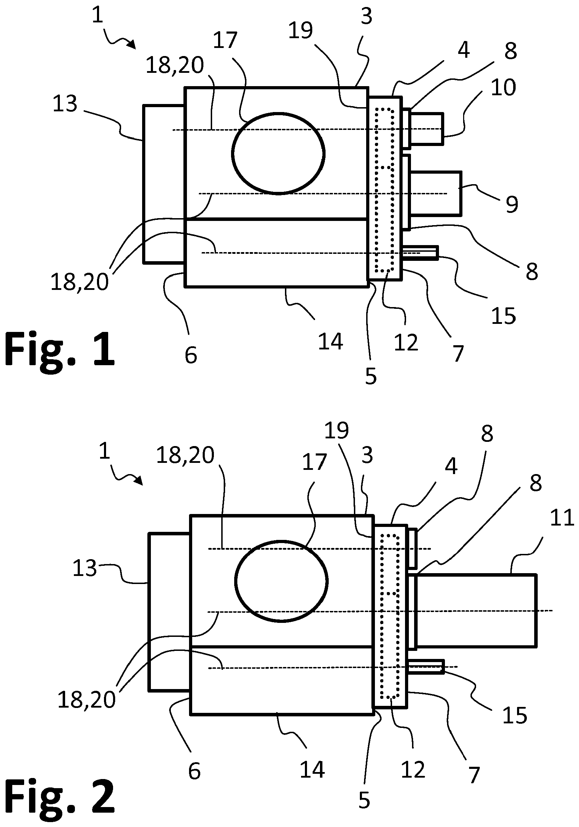

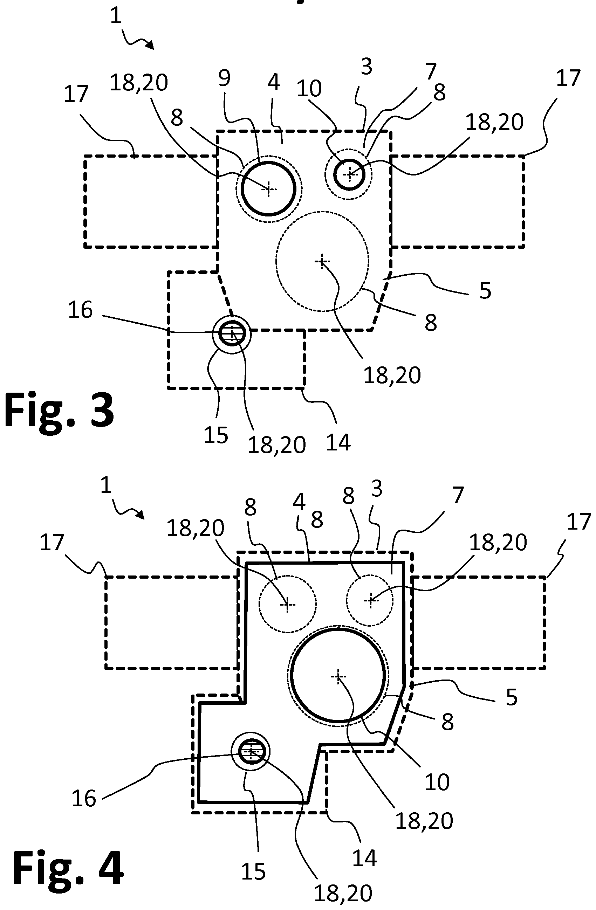

Die Fig. 1 bis 4 zeigen jeweils eine Antriebsvorrichtung 1 in verschiedenen Konfigurationen in einer seitlichen Ansicht und in einer stirnseitigen Ansicht. Die Fig. 1 und 3 zeigen eine erste Konfiguration, die Fig. 2 und 4 zeigen eine zweite Konfiguration. Zu erkennen ist jeweils, dass die Antriebsvorrichtung 1 eine Verbrennungskraftmaschine 3 aufweist, an welcher an einer ersten Stirnseite 5 eine Adapterbaugruppe 4 angeordnet ist. Die Adapterbaugruppe 4 weist eine ab der ersten Stirnseite 5 anliegende Kopplungsstirnseite 19 und eine ab der ersten Stirnseite 5 bzw. der gegenüberliegende Anschlussstirnseite 7 auf, an welcher Anschlussgeometrien 8 zum Anschließen verschiedener elektrischer Aggregate vorgesehen sind. Hierzu zählen bspw. ein Startermotor 9, ein Generator 10 und eine elektrische Antriebsmaschine 11. In der ersten Konfiguration sind an den Anschlussgeometrien 8 ein Startermotor 9 und ein Generator 10 vorgesehen. In einer zweiten Konfiguration in den Fig. 2 und 4 ist an den Anschlussgeometrien 8 nur eine elektrische Antriebsmaschine 11 vorgesehen. Die Verbrennungskraftmaschine 1 ist bei beiden Konfigurationen jeweils ein Boxermotor, dessen Zylinder 17 hier jeweils schematisch dargestellt sind. Zwischen den Zylindern 17 befindet sich die hier nicht dargestellte Kurbelwelle, welche zur Kraftübertragung an Zahnradsysteme 12 innerhalb der Adapterbaugruppe 4 angeschlossen sind. An einer der ersten Stirnseite 5 gegenüberliegenden zweiten Stirnseite 6 der Verbrennungskraftmaschine ist eine Kupplungsbaugruppe 13 angeordnet, welche dazu dient, von der Antriebsvorrichtung 1 erzeugte mechanische Leistung an ein Getriebe 14 zu übertragen, welches seitlich unterhalb der Verbrennungskraftmaschine 1 angeordnet ist. Eine Abtriebswelle 15, über welche Kraft aus dem Getriebe an einen Antrieb eines Fahrzeugs, bspw. eines Motorrads, übertragen werden kann, erstreckt sich durch eine Öffnung 16 der Adapterbaugruppe 4 hindurch. Schematisch dargestellt ist in den Fig. 3 und 4 ebenfalls ein mechanischer Aktor 18, der an der Adapterbaugruppe 4 angeordnet ist und welcher dazu dient, das Getriebe 14 zu schalten.

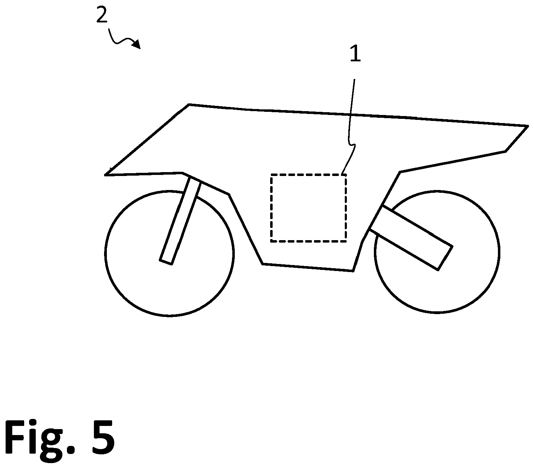

Fig. 5 zeigt hier nur beispielhaft ein Motorrad 2, welches mit einer beschriebenen Antriebsvorrichtung ausgestattet ist.

### Bezugszeichenliste

- 1: Antriebsvorrichtung
- 2: Motorrad
- 3: Verbrennungskraftmaschine
- 4: Adapterbaugruppe
- 5: erste Stirnseite
- 6: zweite Stirnseite
- 7: Anschlussstirnseite
- 8: Anschlussgeometrie
- 9: Startermotor
- 10: Generator
- 11: elektrische Antriebsmaschine
- 12: Zahnradsystem
- 13: Kupplungsbaugruppe
- 14: Getriebe
- 15: Abtriebswelle
- 16: Öffnung
- 17: Zylinder
- 18: Welle
- 19: Kopplungsstirnseite
- 20: Achse

## Patentansprüche

1. Antriebsvorrichtung (1) für ein Motorrad (2) aufweisend eine Verbrennungskraftmaschine (3) mit einer ersten Stirnseite (5) sowie einer der ersten Stirnseite (5) gegenüberliegenden zweiten Stirnseite (6) sowie eine Adapterbaugruppe (4) mit einer Kopplungsstirnseite (19) sowie einer der Kopplungsstirnseite (19) gegenüberliegenden Anschlussstirnseite (7), wobei die Stirnseiten (5, 6, 19, 7) jeweils senkrecht zu Achsen (20) und Wellen (18) der Verbrennungskraftmaschine (3) und der Adapterbaugruppe (4) ausgerichtet sind, wobei weiter die Adapterbaugruppe (4) derart an der Verbrennungskraftmaschine (3) angeordnet ist, dass die erste Stirnseite (5) und die Kopplungsstirnseite (19) aneinander liegen, wobei die Anschlussstirnseite (7) mindestens zwei Anschlussgeometrien (8) für verschiedene elektrische Antriebsaggregate (9, 10, 11) aufweist, wobei zumindest die folgenden Anschlussgeometrien (8) an der Anschlussstirnseite (7) der Adapterbaugruppe (4) vorgesehen sind:
- eine erste Anschlussgeometrie (8) für einen Startermotor (9),
- eine zweite Anschlussgeometrie (8) für einen Generator (10),
- eine dritte Anschlussgeometrie (8) für eine elektrische Antriebsmaschine (11),
- eine Anschlussgeometrie (8) für einen Startergenerator.

2. Antriebsvorrichtung (1) nach Anspruch 1, wobei die Verbrennungskraftmaschine (3) nach Art eines Boxermotors aufgebaut ist.

3. Antriebsvorrichtung (1) nach einem der vorhergehenden Ansprüche, wobei innerhalb der Adapterbaugruppe (4) ein Zahnradsystem (12) zur Kraftübertragung von Antriebskraft von der Verbrennungskraftmaschine (3) zu den Anschlussgeometrien (8) und umgekehrt angeordnet ist.

4. Antriebsvorrichtung (1) nach einem der vorhergehenden Ansprüche, wobei das Zahnradsystem (12) zur Übertragung eines mechanischen Drehmoments ausgelegt ist, welcher mindestens 30% des maximalen mechanischen Drehmoments der Verbrennungskraftmaschine (3) beträgt.

5. Antriebsvorrichtung (1) nach einem der vorhergehenden Ansprüche, wobei an der zweiten Stirnseite (6) der Verbrennungskraftmaschine (3) eine Kupplungsbaugruppe (13) angeordnet ist, welche dazu eingerichtet ist, eine Übertragung von mechanischer Antriebsleistung der Verbrennungskraftmaschine (3) an ein Getriebe (14) zu steuern.

6. Antriebsvorrichtung (1) nach einem der vorhergehenden Ansprüche, wobei ein Getriebe (14) derart seitlich unterhalb der Verbrennungskraftmaschine (3) angeordnet ist, dass es sich zwischen der ersten Stirnseite (5) und einer zweiten Stirnseite (6) erstreckt, wobei eine Abtriebswelle (15) des Getriebes sich durch eine dafür vorgesehene Öffnung (16) in der Adapterbaugruppe (4) hindurch erstreckt.

7. Motorrad (2) aufweisend eine Antriebsvorrichtung (1) nach einem der vorhergehenden Ansprüche.

## Claims

1. Drive apparatus (1) for a motorcycle (2) having an internal combustion engine (3) with a first end side (5) and a second end side (6) which lies opposite the first end side (5), and an adapter assembly (4) with a coupling end side (19) and a connector end side (7) which lies opposite the coupling end side (19), the end sides (5, 6, 19, 7) being oriented in each case perpendicularly with respect to axles (20) and shafts (18) of the internal combustion engine (3) and the adapter assembly (4), the adapter assembly (4) being arranged, furthermore, on the internal combustion engine (3) in such a way that the first end side (5) and the coupling end side (19) bear against one another, the connector end side (7) having at least two connector geometries (8) for different electric drive assemblies (9, 10, 11), at least the following connector geometries (8) being provided on the connector end side (7) of the adapter assembly (4):
- a first connector geometry (8) for a starter motor (9),
- a second connector geometry (8) for a generator (10),
- a third connector geometry (8) for an electric drive machine (11),
- a connector geometry (8) for a starter generator.

2. Drive apparatus (1) according to Claim 1, the internal combustion engine (3) being constructed in the manner of a boxer engine.

3. Drive apparatus (1) according to either of the preceding claims, a gearwheel system (12) for the transmission of drive power from the internal combustion engine (3) to the connector geometries (8) and vice versa being arranged within the adapter assembly (4).

4. Drive apparatus (1) according to one of the preceding claims, the gearwheel system (12) being designed for the transmission of a mechanical torque which is at least 30% of the maximum mechanical torque of the internal combustion engine (3).

5. Drive apparatus (1) according to one of the preceding claims, a clutch assembly (13) being arranged on the second end side (6) of the internal combustion engine (3), which clutch assembly (13) is set up to control a transmission of mechanical drive power of the internal combustion engine (3) to a transmission (14).

6. Drive apparatus (1) according to one of the preceding claims, a transmission (14) being arranged laterally below the internal combustion engine (3) in such a way that it extends between the first end side (5) and a second end side (6), an output shaft (15) of the transmission extending through an opening (16) which is provided for this purpose in the adapter assembly (4).

7. Motorcycle (2) having a drive apparatus (1) according to one of the preceding claims.

## Revendications

1. Dispositif d'entraînement (1) pour une motocyclette (2), présentant un moteur à combustion interne (3) doté d'une première face frontale (5) ainsi que d'une deuxième face frontale (6) opposée à la première face frontale (5), ainsi qu'un sous-ensemble adaptateur (4) doté d'une face frontale d'accouplement (19) ainsi que d'une face frontale de raccordement (7) opposée à la face frontale d'accouplement (19), les faces frontales (5, 6, 19, 7) étant respectivement orientées perpendiculairement aux axes (20) et aux arbres (18) du moteur à combustion interne (3) et du sous-ensemble adaptateur (4), dans lequel le sous-ensemble adaptateur (4) est en outre disposé sur le moteur à combustion interne (3) de telle sorte que la première face frontale (5) et la face frontale d'accouplement (19) sont adjacentes, la face frontale de raccordement (7) présentant au moins deux géométries de raccordement (8) pour différents systèmes d'entraînement électriques (9, 10, 11), au moins les géométries de raccordement suivantes (8) étant prévues sur la face frontale de raccordement (7) du sous-ensemble adaptateur (4) :
- une première géométrie de raccordement (8) pour un démarreur (9),
- une deuxième géométrie de raccordement (8) pour un alternateur (10),
- une troisième géométrie de raccordement (8) pour une machine d'entraînement électrique (11),
- une géométrie de raccordement (8) pour un générateur de démarrage.

2. Dispositif d'entraînement (1) selon la revendication 1, dans lequel le moteur à combustion interne (3) est conçu à la manière d'un moteur à plat.

3. Dispositif d'entraînement (1) selon l'une quelconque des revendications précédentes, dans lequel, à l'intérieur du sous-ensemble adaptateur (4), un système d'engrenages (12) est disposé pour la transmission de force de la force d'entraînement du moteur à combustion interne (3) aux géométries de raccordement (8) et vice versa.

4. Dispositif d'entraînement (1) selon l'une quelconque des revendications précédentes, dans lequel le système d'engrenages (12) est conçu pour la transmission d'un couple mécanique qui est égal à au moins 30 % du couple mécanique maximal du moteur à combustion interne (3).

5. Dispositif d'entraînement (1) selon l'une quelconque des revendications précédentes, dans lequel, sur la deuxième face frontale (6) du moteur à combustion interne (3), un sous-ensemble d'embrayage (13) est disposé qui est aménagé pour commander une transmission de puissance d'entraînement mécanique du moteur à combustion interne (3) à une boîte de vitesses (14) .

6. Dispositif d'entraînement (1) selon l'une quelconque des revendications précédentes, dans lequel une boîte de vitesses (14) est disposée latéralement au-dessous du moteur à combustion interne (3) de telle sorte qu'elle s'étend entre la première face frontale (5) et une deuxième face frontale (6), un arbre de sortie (15) de la boîte de vitesses s'étendant à travers une ouverture (16) prévue à cet effet dans le sous-ensemble adaptateur (4).

7. Motocyclette (2), présentant un dispositif d'entraînement (1) selon l'une quelconque des revendications précédentes.
